# EUROPEAN PATENT APPLICATION

(11) **EP 3 200 441 A1**
(43) Date of publication of application: **02.08.2017**
(21) Application number: 16206910.8
(22) Date of filing: 27.12.2016
(51) Int. Cl.: H04N 1/407

(54) **METHOD FOR ADJUSTING STOP POSITION OF READING UNIT PROVIDED IN IMAGE READING APPARATUS**

(30) Priority: 27.01.2016 JP 2016013830
(71) Applicant: Canon Kabushiki Kaisha, Tokyo 146-8501 (JP)
(72) Inventor: YAMAKAWA, Fumika, Tokyo 146-8501 (JP); SEKI, Satoshi, Tokyo 146-8501 (JP); OKA, Yushi, Tokyo 146-8501 (JP)
(74) Representative: TBK

(57) **Abstract**

A reading unit (20) is positioned in a predetermined region in a case when a transition is made from an operation mode to a non-operation mode. The reading unit (20) moves from the predetermined region to a position at which a white reference plate (22) can be read in a case when a transition is made from the non-operation mode to the operation mode. A movement unit (210) stops when a movement amount of the reading unit (20) measured by a measurement unit (204) becomes a movement amount corresponding to a distance from the boundary to a position at which a white reference plate (22) can be read.

## Description

### BACKGROUND OF THE INVENTION

### Field of the Invention

The present invention relates to an image reading apparatus.

### Description of the Related Art

An image reading apparatus has an optical bench (a carriage) capable of moving in a sub-scanning direction. The carriage has an optical system that guides reflected light from an original to an image sensor. When the image reading apparatus is instructed to read an original, it generates shading correction data by reading a white reference plate, and then reads the original. The shading correction data is used to reduce the influence of unevenness of illumination of a light source that illuminates the original. Japanese Patent No. 5089432 recites an image reading apparatus that, when instructed to transition to an energy saving mode, transitions to the energy saving mode after causing a carriage to move to a white reference plate. It states that by this, it ceases to be necessary to cause the carriage to move to a home position when instructed to return from the energy saving mode.

In a case in which the carriage has been moved to a position that is separated from the white reference plate during the energy saving mode, the image reading apparatus recited in Japanese Patent No. 5089432 fails at reading the white reference plate when returning from the energy saving mode. If reading of the white reference plate is retried, the time for the preparation operation in the image reading apparatus will become longer. There are cases in which a vibration occurs in the image reading apparatus at a time when the image reading apparatus is in a powered off state and not just in the energy saving mode. For example, when the image reading apparatus is moved from one room to another room, vibration occurs in the image reading apparatus, and the position of the carriage shifts away from the white reference plate. Accordingly, it is possible that when the image reading apparatus activates from the powered off state, a white reference plate read retry will be performed, and the time for the preparation operation in the image reading apparatus will become longer.

### SUMMARY OF THE INVENTION

The present invention improves a time for moving to a predetermined position of a reading unit when an image reading apparatus transitions from a non-operation mode to an operation mode.

The present invention is realized, for example, on an image reading apparatus as specified in claims 1 to 11.

Further features of the present invention will become apparent from the following description of exemplary embodiments (with reference to the attached drawings).

### BRIEF DESCRIPTION OF THE DRAWINGS

FIG. 1 is a cross-sectional view of an image reading apparatus.
FIG. 2 is a block diagram of a control unit that controls an image reading apparatus.
FIGS. 3A and 3B are views for describing a position sensor.
FIGS. 4A and 4B are views for describing a position sensor.
FIGS. 5A to 5C are views illustrating a relation between a position of a scanner unit and an output of a position sensor.
FIGS. 6A and 6B are views illustrating a standby position of the scanner unit.
FIGS. 7A to 7D are views illustrating movement of a scanner unit at a time of an original read.
FIG. 8 is a flowchart illustrating movement control at a time of an operation stop.
FIG. 9 is a flowchart illustrating movement control at a time of an operation start.
FIGS. 10A and 10B are views describing a measurement error due to a difference of a drive frequency.
FIGS. 11A and 11B are views illustrating a standby position of the scanner unit.
FIG. 12 is a flowchart illustrating movement control at a time of an operation stop.
FIG. 13 is a flowchart illustrating movement control at a time of an operation start.
FIGS. 14A and 14B are views illustrating a standby position of the scanner unit.
FIG. 15 is a flowchart illustrating movement control at a time of an operation stop.
FIGS. 16A and 16B are views for describing a position sensor.

### DESCRIPTION OF THE EMBODIMENTS

### [First Embodiment]

### <Image Reading Apparatus>

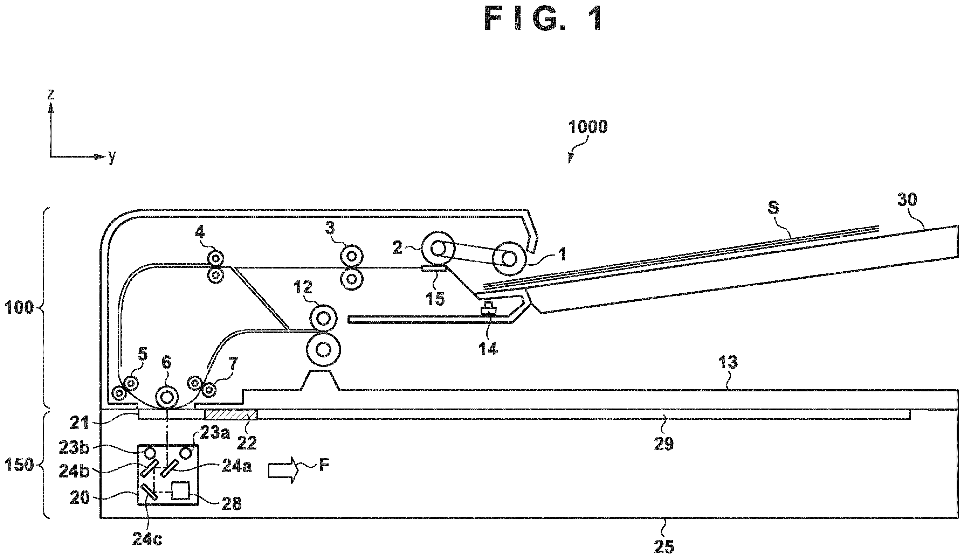

FIG. 1 illustrates an example of an image reading apparatus. An image reading apparatus 1000 is equipped with an image reading unit for reading an image of an original (hereinafter referred to as a reader 150) and an automatic document feeder (hereinafter referred to as an ADF 100). ADF is an abbreviation for Automatic Document Feeder. In FIG. 1, a height direction is defined to be z, and a sub-scanning direction is defined to be y. A depth direction is defined to be x.

### (The Reader 150)

The reader 150 has a scanner unit 20. The scanner unit 20 is provided inside of a housing 25, and is an example of a reading unit capable of moving in a first direction (a sub-scanning direction (a +y direction) that an arrow symbol F indicates) and a second direction (a -y direction) opposite to the first direction. The scanner unit 20 is equipped with LEDs 23a and 23b as light sources for illuminating an original read surface. LED is an abbreviation of Light Emitting Diode. Furthermore, the scanner unit 20 has mirrors 24a, 24b, and 24c which are optical members for guiding light reflected from the original to an image sensor 28. The image sensor 28 may also be a line sensor on which photoelectric converters are formed in an array in the main scanning direction. A flow-reading glass 21, which is a light transmissive plate on which an original is set to face the reader 150 on a side of a top surface of the housing 25 of the reader 150, a shading white plate 22, and a platen glass 29 are provided. The reader 150 has a fixed-document reading mode and a flow-reading mode. In the fixed-document reading mode, by the scanner unit 20 scanning at a fixed speed in a sub-scanning direction, an original set on the platen glass 29 is read. In the flow-reading mode, the scanner unit 20 stops at a center position of a lead roller 6 of the ADF 100, and an original which has been fed and conveyed by the ADF 100 is read. The shading white plate 22 is a white reference plate for generating white level reference data. The reader 150 generates the reference data by reading the shading white plate 22 immediately prior to reading the original. The reference data may be called correction data because it is data used for shading correction. Since the shading white plate 22 is arranged between the flow-reading glass 21 and the platen glass 29, in both the fixed-document reading mode and the flow-reading mode it is necessary that the scanner unit 20 temporarily move below the shading white plate 22.

### (The ADF 100)

An original tray 30 is an original stacking unit for stacking a batch of originals S configured by one or more originals. A paper feed roller 1 abuts the surface of the batch of originals S stacked on the original tray 30 and rotates. By this, the topmost original in the batch of originals S is fed. There are cases in which a plurality of originals are fed by the paper feed roller 1. The plurality of originals are separated into single sheets by the action of a separation roller 2 and a separation pad 15. By a drawing out roller 3 conveying downstream a single original that is separated by the separation roller 2 and the separation pad 15, it causes the original to abut a registration roller 4. At the point in time when the original comes into contact, the registration roller 4 is stopped. A loop-shaped bend is formed in the original, and a skew of the original is corrected. A feed path in which an original that passes through the registration roller 4 is conveyed to the flow-reading glass 21 is arranged on the downstream side of the registration roller 4. An upstream read roller 5 conveys the original that was sent to the feed path to an image reading position. The image sensor 28 optically reads (flow-reads) an original one line at a time at an original reading position immediately below the lead roller 6 when the original passes between the flow-reading glass 21 and the lead roller 6. A downstream read roller 7 conveys the original, and transfers it to a discharge roller 12. The discharge roller 12 discharges the original to a discharge tray 13. Flow-reading of originals is continued as long as an original sensor 14 detects the originals on the original tray 30.

### <Controller>

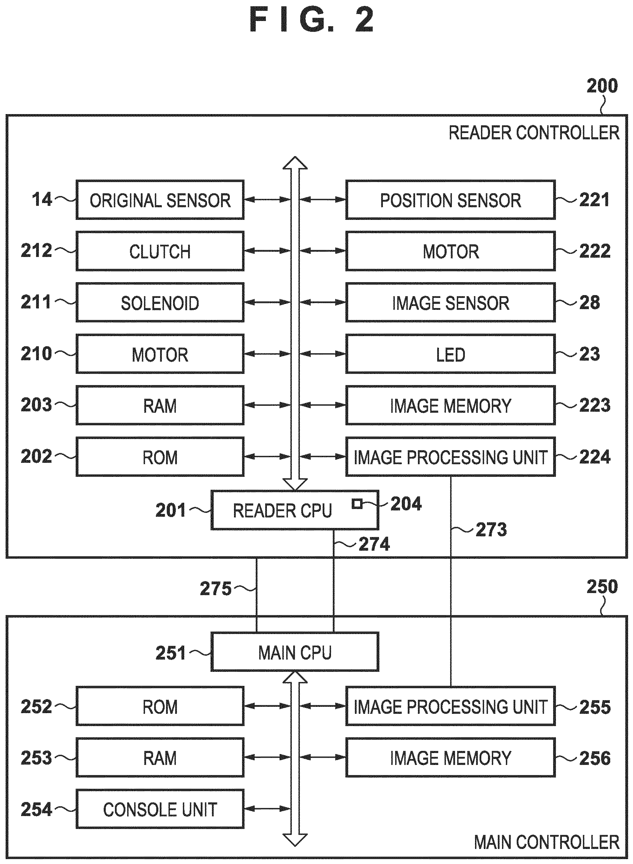

FIG. 2 is a block diagram illustrating an example of a configuration of a control unit of the image reading apparatus 1000. An image read control unit (hereinafter referred to as a reader controller 200) is equipped with a reader CPU 201 which is a central arithmetic processing device, a ROM 202 which is a read only memory, and a RAM 203 which is a random access memory. The ROM 202 stores control programs. The RAM 203 stores input data and data for work. The reader CPU 201 is connected to a motor 210, which drives a roller for conveying an original, a solenoid 211, a clutch 212, the original sensor 14, which is various sensors used for controlling original conveyance. The reader CPU 201 executes original conveyance control by executing a control program. Some or all of the functions of the reader CPU 201 may be realized by a hardware circuit such as an ASIC (an application specific integrated circuit).

The reader CPU 201 controls a motor 222 for causing the scanner unit 20 to move in the sub-scanning direction in accordance with a control program to realize an image reading function. The motor 222 is a stepping motor that rotates in accordance with a driving pulse. The reader CPU 201 specifies a sub-scanning position of the scanner unit 20 based on a result of a detection by a position sensor 221. For example, the reader CPU 201 counts by a counter 204 the number of driving pulses supplied to the motor 222, and obtains the position of the scanner unit 20 based on the count value. The count of the number of pulses may be executed by a counter circuit or the like. An image processing unit 224 executes various image processing (shading correction or the like) on image data obtained by the image sensor 28, and stores the result in an image memory 223.

A main controller 250 is equipped with a main CPU 251, a ROM 252, and a RAM 253. The ROM 252 stores a control program executed by the main CPU 251. The RAM 253 stores input data and data for work. The main controller 250 transmits and receives control commands related to image read control, control data, and the like via a communication line 274 with the reader CPU 201. For example, the main controller 250 receives output of the original sensor 14 from the reader CPU 201. This output indicates whether an original is present or not present on the original tray 30. The main CPU 251 determines whether or not a batch of originals S is stacked on the original tray 30 based on output of the original sensor 14 that is received. The main controller 250 receives image data stored in the image memory 223 from the reader controller 200 through an image line 273 that connects the image processing unit 224 and an image processing unit 255. The image processing unit 255 applies various filtering processing to received image data and stores the result in an image memory 256. The main CPU 251 supplies power to the reader controller 200 through a power supply line 275. For example, when power is input to the image reading apparatus 1000, the main CPU 251 activates before the reader CPU 201, and the main CPU 251 controls the supply of power to the reader controller 200. The image reading apparatus 1000 has an operation mode, in which an image read can be executed, and a non-operation mode in which an image read cannot be executed. The non-operation mode is a mode for economizing power consumption. In a sleep mode which is one non-operation mode, the main CPU 251 is activated, but power is not supplied to the reader controller 200. When instructed through a console unit 254 to return from the sleep mode, the main CPU 251 restarts the supply of power to the reader controller 200. The console unit 254 has an input unit for accepting information inputted from a user, and a display unit for outputting information to the user. The main CPU 251, through the console unit 254, is instructed to perform a power OFF, is instructed to shift to the sleep mode, and is instructed to perform an image read. Regarding the shift to the sleep mode, it is not necessary that there be an instruction by the user. The main CPU 251 may shift to the sleep mode when nothing is instructed from the console unit 254 while a fixed interval elapses.

### <Configuration Example of Detection of Position of Scanner Unit 20>

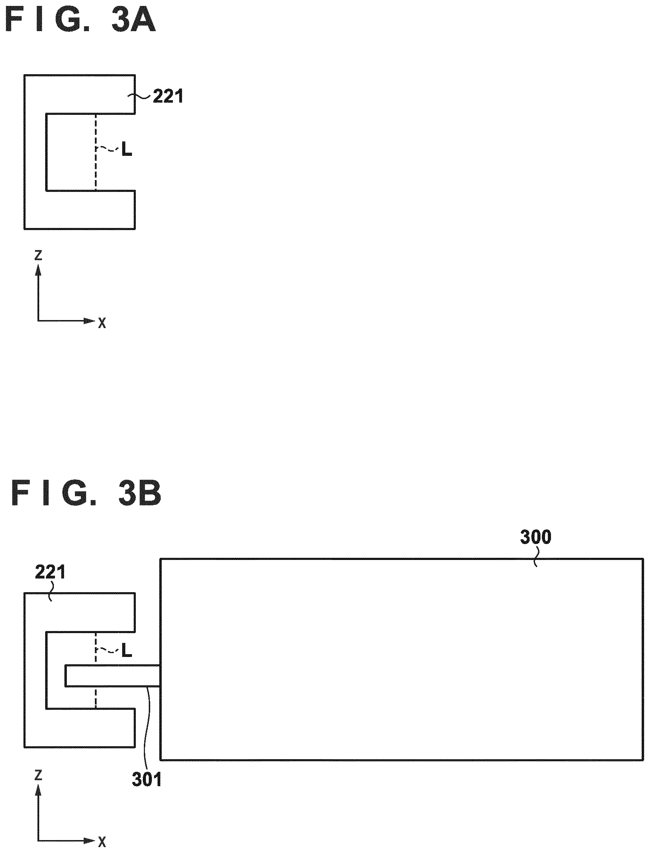

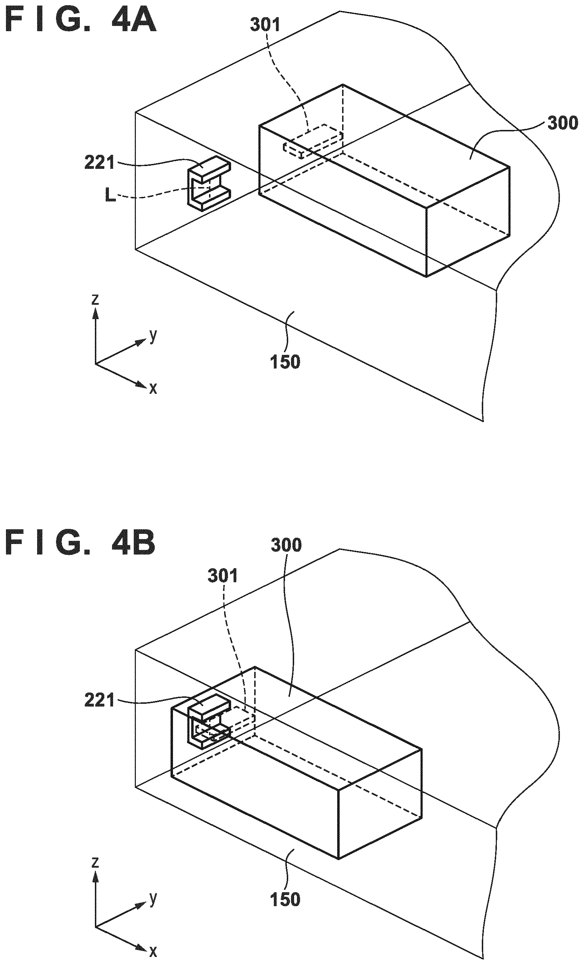

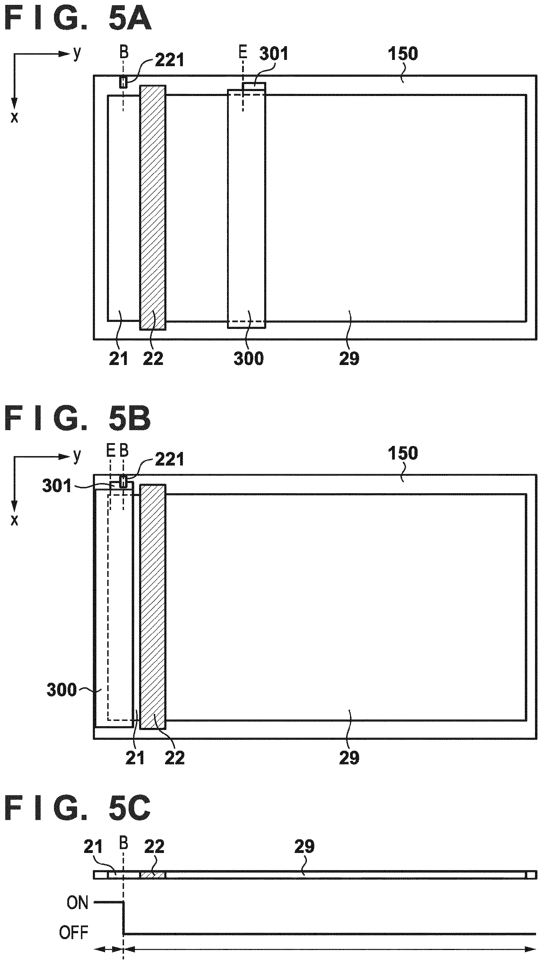

A method of detecting the position of the scanner unit 20 using the position sensor 221 is described with reference to FIG. 3A through FIG. 5C. FIG. 3A and FIG. 3B are side views of the position sensor 221 and the scanner unit 20. FIG. 4A and FIG. 4B are perspective views of the position sensor 221 and the scanner unit 20. FIG. 5A and FIG. 5B are plan views of the position sensor 221 and the scanner unit 20. FIG. 5C is a view illustrating an output signal of the position sensor 221. In FIG. 5C, the ordinate indicates an output level of the position sensor 221. An abscissa indicates the sub-scanning position.

As FIG. 3B, FIG. 4A, and the like illustrate, the scanner unit 20 has a box 300, and a flag 301 that is bonded to the box 300. The box 300 is a housing for accommodating the foregoing LED 23, the mirrors 24, an optical image forming lens (not shown), the image sensor 28, or the like. As FIG. 3A or the like illustrates, the position sensor 221 may be configured by a sensor of a photo-interrupter type, for example. That is, the position sensor 221 is configured by a light emitting element and a light receiving element. In FIG. 3A, FIG. 4A, and the like, infrared light passes through the space L indicated by dashed lines. As FIG. 3A, FIG. 4A, and FIG. 5A illustrate, while the flag 301 is not positioned in the space L, the output level of the position sensor 221 is the OFF level. As FIG. 3B, FIG. 4B, and FIG. 5B illustrate, while the flag 301 is positioned in the space L, the infrared light outputted from the light emitting element of the position sensor 221 is blocked by the flag 301. The result of this is that the level of the detection signal that the light receiving element of the position sensor 221 outputs electrically becomes the ON level.

As FIG. 5A through FIG. 5C illustrate, the output level of the position sensor 221 changes with the position of the space L in the sub-scanning direction, that is the detection position B of the position sensor 221, as the boundary. As FIG. 5B illustrates, if the left end of the flag 301 (hereinafter referred to as the flag left end E) is positioned left of the detection position B, the flag 301 blocks the infrared light, and therefor the output of the position sensor 221 becomes ON. As FIG. 5A illustrates, if the flag left end E is positioned right of the detection position B, the flag 301 does not block the infrared light, and so the output of the position sensor 221 becomes OFF. In this way, ON indicates that the scanner unit 20 is positioned in the predetermined region, and OFF indicates that the scanner unit 20 is positioned outside of the predetermined region.

The scanner unit 20 moves by the motor 222 rotating. The sub-scanning position of the scanner unit 20 is decided from the number of driving pulses or an elapsed period measured by the counter 204 where the timing at which the flag left end E passes through the detection position B is made to be a reference. For example, if the flag left end E is positioned left of the detection position B, the output of the position sensor 221 is ON. In this state, the reader CPU 201 drives the motor 222 to cause the scanner unit 20 to move towards the right, and causes the flag left end E to pass through the detection position B. In this case, the output of the position sensor 221 is OFF from when the flag left end E reaches the right of the detection position B. The reader CPU 201 causes the counter 204 to count driving pulses of the motor 222 from the point in time when the output of the position sensor 221 changes from ON to OFF. The rotation angle of the motor 222 in accordance with one driving pulse is fixed since the motor 222 is a stepping motor. Specifically, also the distance that the scanner unit 20 moves in accordance with one driving pulse is also fixed. Accordingly, the distance of movement of the scanner unit 20 can be determined according to a count of the driving pulses.

Meanwhile, the reader CPU 201 causes the motor 222 to be driven causing the scanner unit 20 to move rightward, and causes the flag left end E to pass the detection position B in a case when the flag left end E is positioned to the right of the detection position B. The output of the position sensor 221 is ON from when the flag left end E reaches the left of the detection position B. The reader CPU 201 counts a number of driving pulses of the motor 222 from a point (hereinafter referred to as an edge of the position sensor 221) where the output of the position sensor 221 changes. Then, the motor 222 is caused to stop when the count value reaches a predetermined value. By this, the scanner unit 20 can be caused to stop at a desired position within a predetermined region.

Note that in the present embodiment, although driving pulses are counted, a time may also be measured. In a case when driving pulses are generated according to a predetermined cycle, the same control can be performed by measuring the time in place of counting the number of driving pulses. A measurement of time may be executed by a timer circuit, and may be executed by the reader CPU 201.

### <Processing Performed at times of Stopping Operation and Starting Operation of the Image Reading Apparatus>

As described above, the image reading apparatus 1000 has two non-operation states (non-operation modes): "power OFF" and "sleep". "power OFF" is a state in which the entire power supply of the image reading apparatus 1000 is stopped. However, configuration may be such that power is supplied only to a circuit that detects ON/OFF of a main switch in the console unit 254 in the "power OFF" state as well. "Power OFF" is a state that the image reading apparatus 1000 transitions to by power OFF being instructed via the console unit 254 for example. "Sleep" is a state in which power is supplied only to some control circuits such as the main CPU 251 or the like, and power is not supplied to another location. The image reading apparatus 1000 transitioning to a state in which it is possible to read an image from a "power OFF" state is referred to as "power ON". Transition to a state in which it is possible to read an image from a "sleep" state is referred to as "return from sleep". In this way, power consumption of the power OFF mode is lower than power consumption of the sleep mode.

### ("Power OFF"/"Sleep")

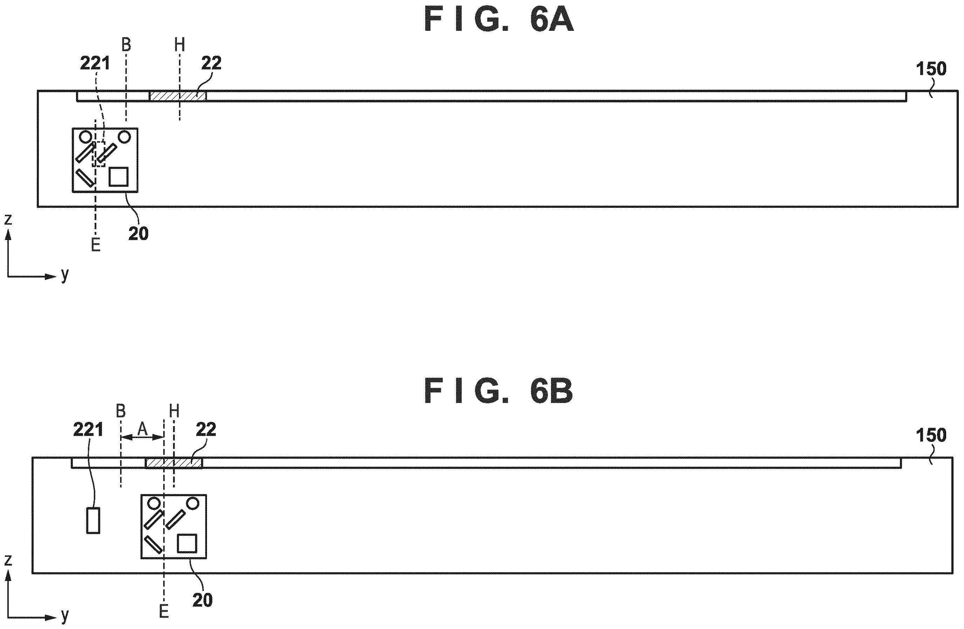

FIG. 6A and FIG. 6B are views for describing a standby position of the scanner unit 20. The main CPU 251 makes a notification of power OFF/sleep to the reader CPU 201 via the communication line 274 when an instruction of a stopping operation instruction (power OFF/sleep) is input from a user via the console unit 254. The reader CPU 201 causes the scanner unit 20 to move to a range where the output of the position sensor 221 is ON in a method described later when an instruction of power OFF/sleep is received. FIG. 6A illustrates that the scanner unit 20 is stopped within the predetermined region where the output of the position sensor 221 is ON. The predetermined region is a sub-scanning range where the output of the position sensor 221 is ON. Note, a standby position in power OFF and a standby position in sleep may be the same and may be different. In other words, the reader CPU 201 may determine whether content of an instruction is power OFF or sleep, and select the standby position in accordance with the determination result.

The reader CPU 201 makes a notification of preparation completion to the main CPU 251 via the communication line 274 when the scanner unit 20 completes movement to the range where the output of the position sensor 221 is ON. The main CPU 251 stops the supply of power to the reader controller 200 through the power supply line 275 when the notification of preparation completion of the reader CPU 201 is received.

### ("Power ON"/"Return from Sleep")

The main CPU 251 starts a supply of power to the reader controller 200 through the power supply line 275 when starting operation (power ON/return from sleep) of the image reading apparatus 1000. The reader controller 200 starts activation processing when the supply of power is started. In the activation processing, the reader CPU 201 causes the scanner unit 20 to move to a home position H and to read the shading white plate 22. The reader CPU 201 makes a notification that the activation processing is completed to the main CPU 251 when these processes complete. Movement to the home position H of the scanner unit 20 is performed in a method described later. FIG. 6B illustrates that the scanner unit 20 is stopped at the home position H.

In the present embodiment, as illustrated in FIG. 6B, the home position H is a sub-scanning position corresponding to below the shading white plate 22. However, the home position H is not limited to this if it is a sub-scanning range where the output of the position sensor 221 is OFF. However, there is the advantage that causing movement from the home position H to under the shading white plate 22 at a time of reading the shading white plate 22 can be omitted by setting the home position H to be below the shading white plate 22.

The reader CPU 201 performs reading of the shading white plate 22 for a generation of shading correction data in a method described later when movement to the home position H of the scanner unit 20 completes. By this, the image reading apparatus 1000 shortens the time from receiving an image scan request to actually starting a read of an original. The reader CPU 201 generates by the image processing unit 224 the shading correction data based on the image data generated by reading the shading white plate 22 and stores this to the RAM 203. The image processing unit 224 executes the shading correction by using the shading correction data in relation to the image data generated from the original.

The reader CPU 201 makes a notification of an output of the original sensor 14 to the main CPU 251 in a communication with the main controller 250 in the activation processing. The main CPU 251 determines whether or not a batch of originals S is stacked on the original tray 30 based on output of the original sensor 14 that is notified.

### <Original Reading Operation of the Reader 150>

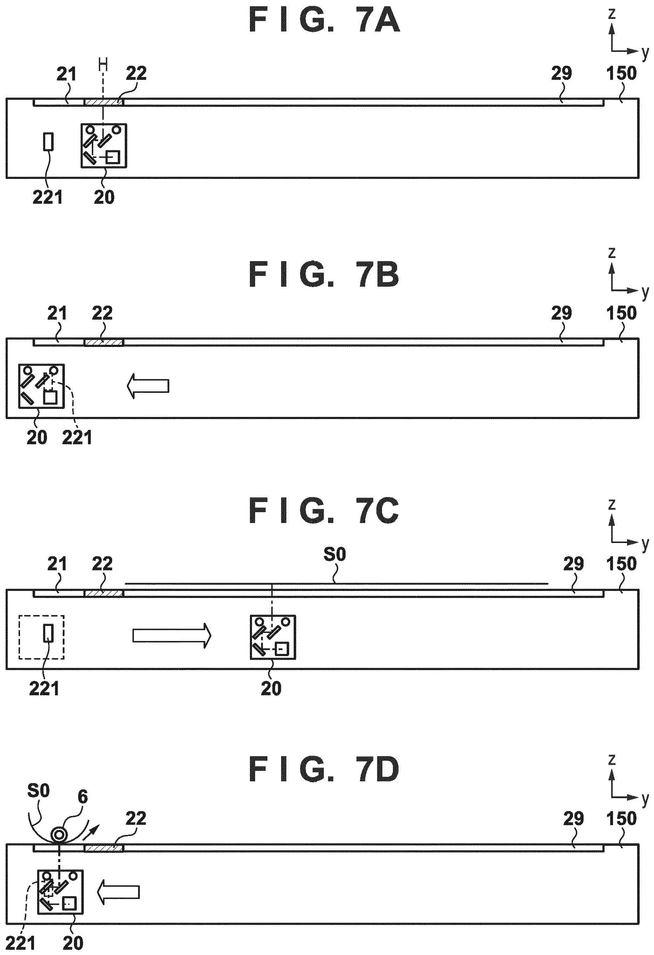

FIG. 7A through FIG. 7D are views for describing an original reading operation of the scanner unit 20. The reader CPU 201 causes the scanner unit 20 to stop at the home position H when the image reading apparatus 1000 is in the operation state and not currently reading an original. When the scanner unit 20 is stopped at the home position H, the output of the position sensor 221 is OFF. FIG. 7A illustrates that the scanner unit 20 is stopped at the home position H. Note, as a counter-measure to vibration, the reader CPU 201 may cause the scanner unit 20 to reliably stop at the home position H by exciting the motor 222.

The reader CPU 201 monitors the output of the original sensor 14 during operation of the image reading apparatus 1000. The reader CPU 201 makes a notification of the output of the original sensor 14 to the main CPU 251 via the communication line 274 each time the output of the original sensor 14 changes. The main CPU 251 determines whether or not a batch of originals S is stacked on the original tray 30 based on the notified output of the original sensor 14. The reader 150 performs a reading of an original when a start of reading is instructed from the main CPU 251. For example, the main CPU 251 makes a notification of a "flow-reading start" to the reader CPU 201 if the batch of originals S are stacked on the original tray 30 when an instruction of a start of a reading of the original is input from a user via the console unit 254. The main CPU 251 makes a notification of a "fixed-reading start" to the reader CPU 201 if the batch of originals S is not stacked on the original tray 30 when an instruction to start reading of an original is input from a user.

### (Reading of an Original)

A reading of an original (image information) is performed in the following method. This method is common for a fixed-reading and flow-reading, and in a reading of the shading white plate 22. The reader CPU 201 lights the LEDs 23a and 23b in a state in which the scanner unit 20 is positioned below the original or the shading white plate 22 and illuminates the surface of the original or the shading white plate 22. Light reflected from the surface of the original or the shading white plate 22 reflects on the mirrors 24a, 24b, and 24c and forms an image on the image sensor 28. The image sensor 28 inputs this reflected light, reads the image information one line at a time, and outputs a corresponding image signal. The image processing unit 224 converts an analog image signal to a digital image data and stores it to the image memory 223. A read result of the shading white plate 22 is stored in the RAM 203 as shading correction data. The image processing unit 224 performs shading correction on the image data of the original by using the shading correction data. Reading of the shading white plate 22 is performed in a state in which the scanner unit 20 is positioned at the reading position of the shading white plate 22. As illustrated in FIG. 7A, the home position H matches with the reading position of the shading white plate 22. For this reason, the reader CPU 201 starts a reading of the shading white plate 22 as is rather than causing the scanner unit 20 to move when a start instruction of a reading of the original is received from the main CPU 251.

### (Fixed-document Reading Mode)

The reader CPU 201 performs a reading of the shading white plate 22 for generating shading correction data in the previously described method when "fixed-reading start" is instructed. Next, the reader CPU 201 drives the motor 222 and causes the scanner unit 20 to move to the position illustrated in FIG. 7B. The position at which the scanner unit 20 is stopped in FIG. 7B is a acceleration start position for the fixed-reading. Subsequently, the reader CPU 201 drives the motor 222 and reads an original S0 set on the platen glass 29 while causing the scanner unit 20 to move in the sub-scanning direction illustrated by the arrow symbol of FIG. 7C. The reader CPU 201 drives the motor 222 and causes the scanner unit 20 to move to the home position H when the reading of the original S0 completes.

### (Flow-reading Mode)

The reader CPU 201 performs a reading of the shading white plate 22 for the generation of shading correction data when "flow-reading start" is notified. Also, the reader CPU 201 controls the ADF 100 to start a feed and conveyance of the original S0. Next, the reader CPU 201 drives the motor 222 to cause the scanner unit 20 to move to the flow-reading position illustrated in FIG. 7D. The flow-reading position exists below the center position (axis of revolution) of the lead roller 6. Also, the reader CPU 201 controls the ADF 100 read while conveying the original S0. By this, the entirety of the original S0 is read. The reader CPU 201 drives the motor 222 to cause the scanner unit 20 to move to the home position H when the reading of the original S0 completes.

### <Movement Control of a Scanner Unit at times of Starting Operation and Stopping Operation>

An example of control in movement of the scanner unit 20 is described using FIG. 6A, FIG. 6B, FIG. 8, and FIG. 9. Regarding the movement direction of the scanner unit 20, the +y direction is defined as to the right and the -y direction is defined as to the left in FIG. 6A and FIG. 6B. As illustrated in FIG. 6B, a number of driving pulses supplied to the motor 222 for moving the scanner unit 20 from the detection position B to the home position H is a predetermined value A. The count of the driving pulses is counted from a timing at which the output of the position sensor 221 changes to OFF by the flag left end E passing the detection position B. Accordingly, the predetermined value A may be calculated from a distance from the detection position B to the position of the flag left end E when the scanner unit 20 is stopped at the home position H. The predetermined value A is obtained at the time of designing the image reading apparatus 1000 and it is stored in the ROM 202. Accordingly, the reader CPU 201 reads the predetermined value A from the ROM 202 and compares it to the count value of the counter 204.

### (Stopping Operation)

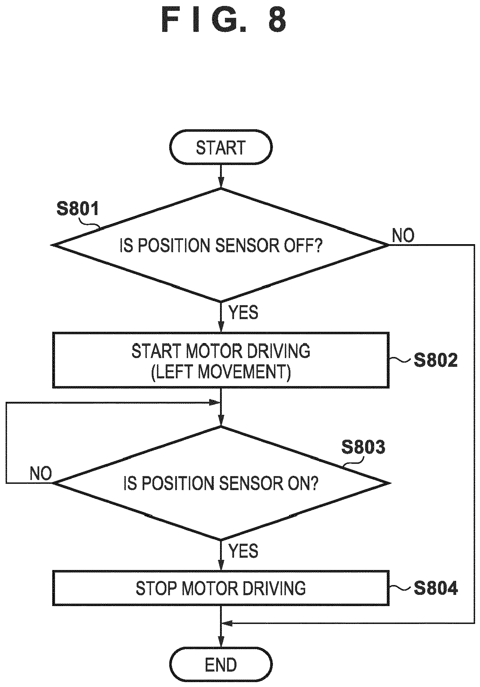

Each process of the flowchart illustrated in FIG. 8 is a process executed by the reader CPU 201 when a stopping operation is instructed from the console unit 254. The scanner unit 20 is required to be positioned at the sub-scanning range where the output of the position sensor 221 is ON when the image reading apparatus 1000 shifts to the non-operation state. This is because the count of the driving pulses is started from a timing at which the output of the position sensor 221 switches from ON to OFF. In other words, the time for specifying the position of the scanner unit 20 is shortened if the time for moving the scanner unit 20 until the counting of the driving pulses starts can be shortened.

In step S801, the reader CPU 201 determines whether or not the output of the position sensor 221 is OFF. The flag left end E of the scanner unit 20 is positioned at the left from the detection position B if the output of the position sensor 221 is ON. In such a case, the reader CPU 201 ends the processing according to the flowchart because it is not necessary to cause the scanner unit 20 to move any further. Normally, the flag left end E of the scanner unit 20 is positioned to the right from the detection position B because the scanner unit 20 waits at the home position H. For this reason, the output of the position sensor 221 is OFF. In this way, the reader CPU 201 advances the processing to step S802 so as to arrange the scanner unit 20 within the predetermined region where the output becomes ON if the output of the position sensor 221 is OFF. In step S802, the reader CPU 201 starts driving of the motor 222 so that the output of the position sensor 221 is ON by causing the scanner unit 20 to move in a leftward direction. In step S803, the reader CPU 201 determines whether or not the output of the position sensor 221 is ON. The reader CPU 201 causes the scanner unit 20 to move continuously in a leftward direction while the output of the position sensor 221 is OFF. The reader CPU 201 advances processing to step S804 when the output is ON. In step S804, the reader CPU 201 stops the driving of the motor 222 in order to cause the scanner unit 20 to stop. By this, the scanner unit 20 stops in a state where the flag left end E is positioned at the detection position B (or nearby).

### (When Starting Operation)

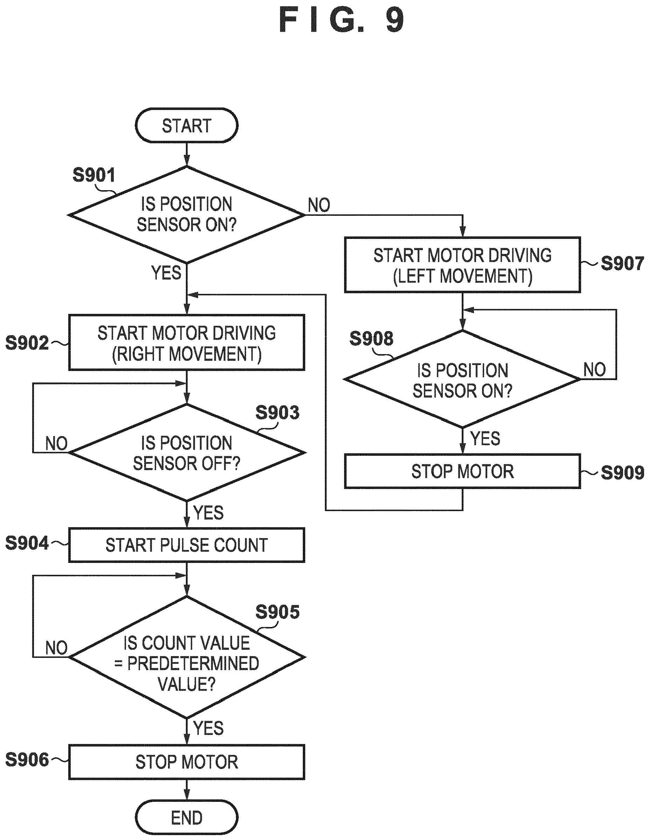

Each process of the flowchart illustrated in FIG. 9 is a process executed by the reader CPU 201 when a starting operation is instructed from the console unit 254. This processing is processing in which the scanner unit 20 is caused to move to the home position H.

In step S901, the reader CPU 201 determines whether or not the output of the position sensor 221 is ON. The scanner unit 20 should be positioned at a position where the output of the position sensor 221 is ON according to the processing illustrated in FIG. 8. However, it can be considered that a vibration in the image reading apparatus 1000 may occur while the image reading apparatus 1000 is stopped, causing the position of the scanner unit 20 to shift from the desired position. For this reason, it is determined whether or not the output of the position sensor 221 is ON in order to determine whether or not the position of the scanner unit 20 is the desired position. The reader CPU 201 advances the processing to step S902 because the position of the scanner unit 20 is the desired position if the output of the position sensor 221 is ON. In step S902, the reader CPU 201 starts the driving of the motor 222 in order to cause the scanner unit 20 to move to the home position H. By this, the scanner unit 20 moves in a rightward direction. In step S903, the reader CPU 201 determines whether or not the output of the position sensor 221 switched from ON to OFF so as to search for the count start position. The reader CPU 201 continues the driving of the motor 222 if the output of the position sensor 221 is ON. When the output of the position sensor 221 is OFF, the reader CPU 201 advances the processing to step S904 because this means that the flag left end E has passed the detection position B.

In step S904, the reader CPU 201 starts a count of the number of driving pulses supplied to the motor 222 in order to measure the sub-scanning position of the scanner unit 20. The count is executed by the counter 204. In step S905, the reader CPU 201 determines whether or not the count value reaches the predetermined value A in order to determine whether or not the scanner unit 20 reached the home position H. If the count value does not match the predetermined value A, the reader CPU 201 continues counting and moving the scanner unit 20 because the scanner unit 20 has not yet reached the home position H. Meanwhile, the reader CPU 201 advances the processing to step S906 when the count value matches the predetermined value A. In step S906, the reader CPU 201 causes the motor 222 to stop and causes the scanner unit 20 to stop at the home position H.

Note that in step S901, the reader CPU 201 advances the processing to step S907 in a case when the output of the position sensor 221 is OFF at the time of the starting operation (specifically, a case when the flag left end E is positioned to the right from the detection position B). In step S907, the reader CPU 201 drives the motor 222 in order to direct the flag left end E of the scanner unit 20 to the detection position B. By this, the scanner unit 20 moves in a leftward direction. In step S908, it is determined whether or not the output of the position sensor 221 is ON. The flag left end E has not reached the detection position B if the output of the position sensor 221 is OFF. In such a case, the reader CPU 201 continues the driving of the motor 222. Meanwhile, the reader CPU 201 advances to step S909 when the output becomes ON. In step S909, the reader CPU 201 stops the motor 222 and advances the processing to step S902.

In the present embodiment, although the position of the scanner unit 20 is measured by counting the number of driving pulses, the position of the scanner unit 20 may be measured by another method. For example, an encoder which measures the number of rotations of the motor 222 may be employed. In such a case, the reader CPU 201 converts the number of rotations of the motor 222 measured by the encoder to a movement distance or a position.

### (Effects)

By virtue of this embodiment, the reader CPU 201 causes the scanner unit 20 to move to the left into a range where the position sensor is ON at a time of a stopping operation of the image reading apparatus 1000. By this, the scanner unit 20 can be positioned at the home position H by the scanner unit 20 only being caused to move to the right in the activation processing of the image reading apparatus 1000. Compared to the past, the time required in the activation processing can be reduced because the movement amount of the scanner unit 20 in the activation processing is reduced. Conventionally, it is assumed that the scanner unit 20 is stopped at the home position H in the power saving mode. Accordingly, the movement amount becomes large because the scanner unit 20 moves in a leftward direction so as to search for the position where the position sensor 221 changes from ON to OFF, and then, it is further caused to moved in a rightward direction. In the first embodiment, cases in which the movement amount is reduced will likely increase because the position where the position sensor 221 changes from ON to OFF is found by causing the scanner unit 20 to move in the rightward direction as a rule.

It can be considered that the scanner unit 20 is positioned in a range where the output of the position sensor 221 is OFF when starting operation as an exception. For example, the scanner unit 20 happens to move when the image reading apparatus 1000 is disturbed while operation is stopped. The scanner unit 20 will likely be positioned in a range where the output of the position sensor 221 is OFF when an electrical outage occurs during a reading of the original. Accordingly, step S901 and step S907 to step S908 are introduced. In other words, the reader CPU 201 in the activation processing causes the scanner unit 20 to move to the left into the range where the position sensor 221 is ON and then causes it to move to the right. Although the movement amount of the scanner unit 20 in the activation processing is the same as what was conventional in such a case, first and foremost such a case is rare. Accordingly, the present embodiment can likely shorten the activation processing time over what was conventional in most cases.

### [Second Embodiment]

In the first embodiment, the scanner unit 20 moves to the left until the position sensor 221 is ON and stops when the image reading apparatus 1000 stops operation. Also, the scanner unit 20 moves to the right when the image reading apparatus 1000 starts operation, and stops at the home position H by measuring the movement distance where the position at which the position sensor 221 becomes OFF is used as a reference. Also, the home position H is a position at which the shading white plate 22 can be read. Meanwhile, the second embodiment is characterized in that a distance from the standby position to the detection position B where the scanner unit 20 stops is maintained at a sufficient distance when the image reading apparatus 1000 stops operation. In particular, the position sensor 221 is OFF and the position is measured by the scanner unit 20 moving to the right when the image reading apparatus 1000 starts operation. However, measurement errors increase when a position measurement is started prior to the rotating speed of the motor 222 reaching a sufficient rotating speed. Accordingly, there is the necessity to set as the standby position a position from which the motor 222 can reach a sufficient rotating speed before the position sensor 221 becomes OFF. In second embodiment, description of portions in common with the first embodiment is omitted.

### <Influence on Distance of Movement due to Difference of Rotating Speed of the Motor 222>

As described above, a method for counting the number of driving pulses supplied to the motor 222 can be considered as a method for measuring the distance of movement or the position of the scanner unit 20. Attention is required in setting the rotating speed of the motor 222 in order to increase the measurement accuracy. The distance of movement of the scanner unit 20 varies even if the motor 222 is driven the same number of pulses when a variation exists in the rotating speed of the motor 222 when the scanner unit 20 passes the edge of the position sensor 221. Accordingly, the rotating speed at the edge is required to be controlled at a predetermined speed. In other words, it is necessary that the rotating speed when the flag left end E passes the detection position B be controlled to be fixed. For fixing the rotating speed at the edge of the position sensor 221 it is necessary that the motor 222 accelerate until it reaches the predetermined speed from the start of movement until the flag left end E passes the detection position B. It is possible to accelerate the motor 222 to the predetermined speed regardless of the distance from the position of the start of movement to the detection position B if a drive frequency (frequency of a driving pulse) corresponding to the predetermined speed is less than or equal to a self-starting frequency of the motor 222. Meanwhile, it is possible that the flag left end E will pass the detection position B before the motor 222 accelerates to the predetermined speed when a rotating speed corresponding to a drive frequency which exceeds the self-starting frequency is set for the predetermined speed. In this way, an error in the movement distance arises when the distance from the position of starting movement to the detection position B is too short and the motor 222 cannot accelerate to the predetermined speed. In other words, there is a difficulty in causing the scanner unit 20 to stop with more accuracy at the home position H.

### (Reason for Error Occurrence)

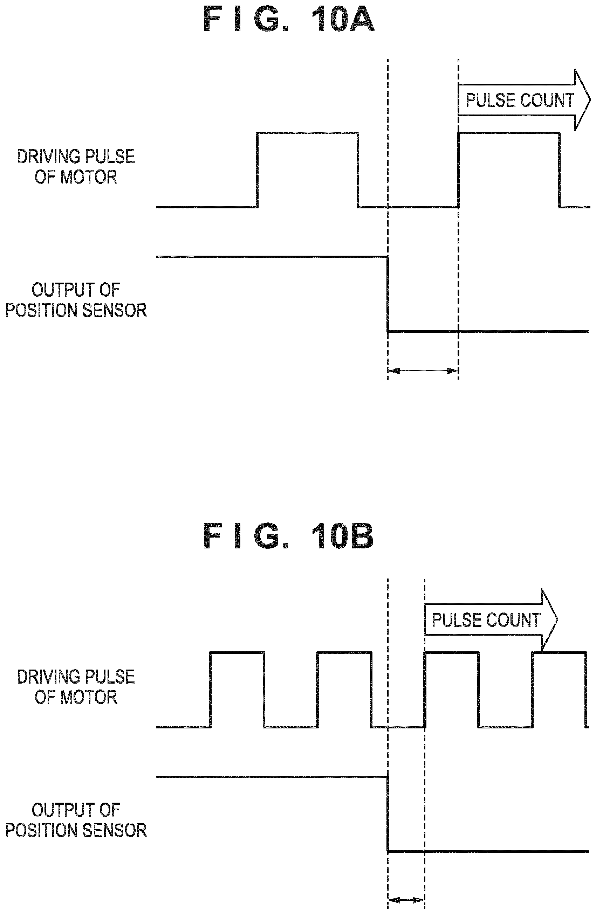

FIG. 10A and FIG. 10B illustrate a relationship between the rotating speed of the motor 222 and the count value of the driving pulse. The movement distance differs even if the motor 222 is driven the same number of pulses from the edge of the position sensor 221 due to the rotating speed (drive frequency) differing at the edge of the position sensor 221. The rotating speed of the motor 222 is faster in FIG. 10B compared to FIG. 10A. Specifically, the drive frequency of the motor 222 is higher in FIG. 10B compared to the drive frequency of the motor 222 in FIG. 10A.

As illustrated in FIG. 10A and FIG. 10B, the output of the position sensor 221 and the driving pulse of the motor 222 are not synchronized. For this reason, the timing at which the count is actually started is a rising (or falling) edge of the first driving pulse to arrive after the output of the position sensor 221 changed. The counter 204 of the present embodiment is assumed to start the count from the rising edge. For this reason, as illustrated by a bidirectional arrow symbol in FIG. 10A and FIG. 10B, there is a case in which a delay time arises in the time because the count of the driving pulses is actually started from the edge of the position sensor 221. The delay time is a time corresponding to a maximum of one pulse although it depends on the timing of the edge of the position sensor 221 and the drive frequency of the motor 222. An error arises in the movement distance of the scanner unit 20 due to this delay time. The error of the movement distance is reduced by controlling the drive frequency of the motor 222, in other words the rotating speed of the motor 222, at the point in time when the scanner unit 20 passes the edge of the position sensor 221 to be fixed.

### <Movement Control of the Scanner Unit 20 at times of Starting Operation and Stopping Operation>

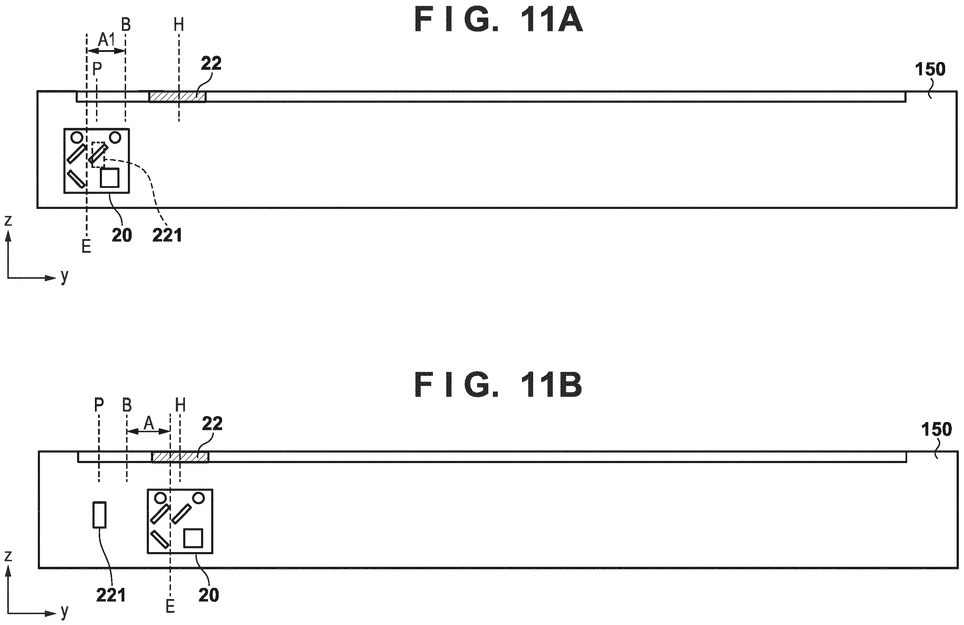

FIG. 11A illustrates the scanner unit 20 stopped at the sleep position P which is one of the standby positions. FIG. 11B illustrates the scanner unit 20 stopped at the home position H which is one of the standby positions. The sleep position P is a sub-scanning range where the output of the position sensor 221 is ON and determined to be a position that is a sufficient distance from the detection position B. A sufficient distance is a distance from which the rotating speed of the motor 222 can accelerate from zero to the predetermined speed α before the scanner unit 20 reaches the edge of the position sensor 221 from the sleep position P. The predetermined velocity α is a maximum rotating speed calculated from an activation characteristic of the motor 222 and that the motor 222 is capable of reaching for example.

As illustrated in FIG. 11A, the number of driving pulses of the motor 222 which are required from a state in which the scanner unit 20 is stopped at the sleep position P until it reaches the edge of the position sensor 221 is defined by a predetermined value A1. Specifically, the predetermined value A1 is the number of driving pulses which corresponds to the distance from the position of the flag left end E to the detection position B of the position sensor 221 when the scanner unit 20 is stopped at the sleep position P. The reader CPU 201 starts a count of the number of driving pulses when the output of the position sensor 221 changes to ON. The reader CPU 201 causes the scanner unit 20 to stop at the sleep position P by stopping the motor 222 when the count value reaches the predetermined value A1.

As illustrated in FIG. 11B, the number of driving pulses of the motor 222 which are required for the scanner unit 20 to move to the home position H from reaching the edge of the position sensor 221 is defined as the predetermined value A. The predetermined value A is the number of driving pulses corresponding to the distance from the detection position B of the position sensor 221 to the position of the flag left end E when the scanner unit 20 is stopped at the home position H. The reader CPU 201 starts a count of the number of driving pulses when the output of the position sensor 221 changes to OFF. The reader CPU 201 causes the scanner unit 20 to stop at the home position H by stopping the motor 222 when the count value reaches the predetermined value A. Note, the predetermined value A1 and the predetermined value A are decided at the design stage for the image reading apparatus 1000 and are stored in the ROM 202.

### (When Stopping Operation)

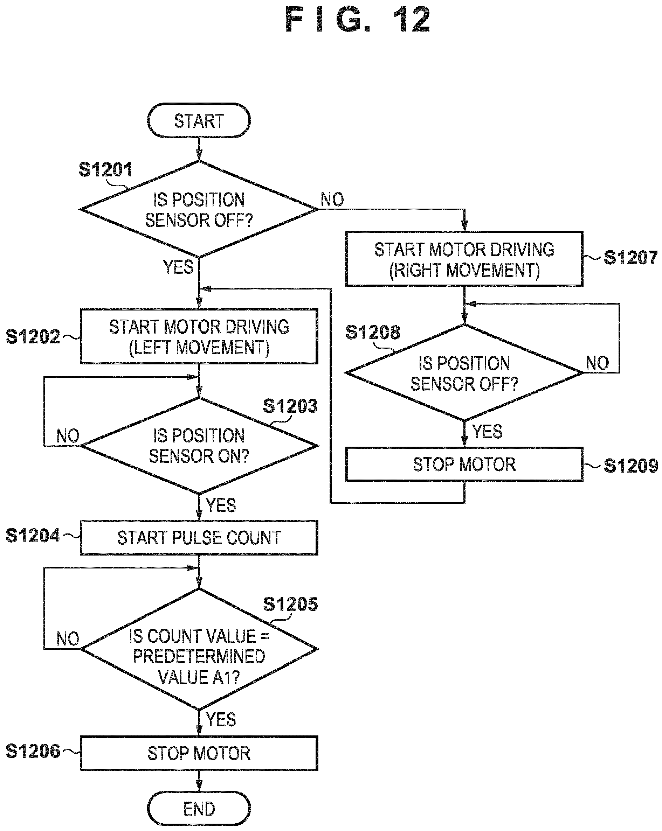

FIG. 12 is a flowchart illustrating movement control of the scanner unit 20 when stopping operation. The scanner unit 20 stops at the sleep position P which is a position where the rotating speed of the motor 222 can be sufficiently accelerated from zero to the predetermined speed α by this control. All of the processes of the flowchart are executed by the reader CPU 201. The reader CPU 201 starts movement to the sleep position P of the scanner unit 20 when the stopping operation is instructed from the console unit 254 or the like.

In step S1201, the reader CPU 201 determines whether or not the output of the position sensor 221 is OFF. The flag left end E of the scanner unit 20 is positioned at the right from the detection position B if the output of the position sensor 221 is OFF. Accordingly, in such a case, the reader CPU 201 advances the processing to step S1202 because it is necessary to move the scanner unit 20 to the left. In step S1202, the reader CPU 201 starts the driving of the motor 222 in order for the scanner unit 20 to move to the left. In step S1203, the reader CPU 201 determines whether or not the output of the position sensor 221 is ON so as to determine whether or not the count should be started. As described above, if the flag left end E is positioned left of the detection position B, the output of the position sensor 221 is ON. The reader CPU 201 advances to step S1204 if the output of the position sensor 221 is ON. In step S1204, the reader CPU 201 starts the count of the number of the driving pulses supplied to the motor 222. The count is executed by the counter 204. In step S1205, the reader CPU 201 determines whether or not the count value reaches the predetermined value A1 so as to determine whether or not the scanner unit 20 reached the sleep position P. The reader CPU 201 advances the processing to step S1206 when the count value reaches the predetermined value A1. In step S1206, the reader CPU 201 causes the motor 222 to stop and causes the scanner unit 20 to stop at the sleep position P.

Meanwhile, in step S1201, the flag left end E of the scanner unit 20 is positioned to the left of the detection position B if the output of the position sensor 221 is ON. As is, it is likely to not be possible to cause the scanner unit 20 to accurately stop at the sleep position P when the scanner unit 20 is allowed be positioned to the left. Accordingly, firstly, it is necessary that the scanner unit 20 be caused to move to the right to a position where the output of the position sensor 221 becomes OFF. In step S1201, the reader CPU 201 advances the processing to step S1207 in a case when the output of the position sensor 221 is ON. In step S1207, the reader CPU 201 starts the driving of the motor 222 in order for the scanner unit 20 to move to the right. In step S1208, the reader CPU 201 determines whether or not the output of the position sensor 221 is OFF so as to determine whether or not the scanner unit 20 moved sufficiently to the right. The reader CPU 201 advances to step S1209 if the output of the position sensor 221 becomes OFF. In step S1209, the reader CPU 201 causes the motor 222 to stop and advances the processing to step S1202. By the processing above, it becomes possible to cause the scanner unit 20 to stop at the sleep position P when the image reading apparatus 1000 stops operation.

### (When Starting Operation)

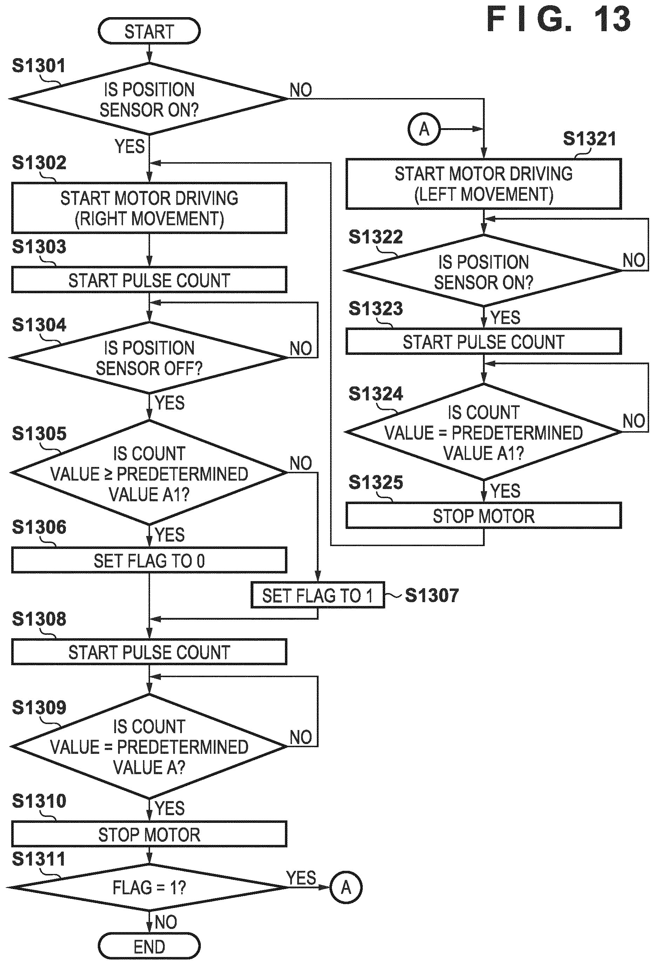

FIG. 13 is a flowchart illustrating movement control of the scanner unit 20 when starting operation. All of the processes of the flowchart are executed by the reader CPU 201. When starting operation, the reader CPU 201 causes the scanner unit 20 to move from the sleep position P to the home position H.

In step S1301, the reader CPU 201 determines whether or not the output of the position sensor 221 is ON so as to determine whether or not the scanner unit 20 is positioned at the sleep position P. The reader CPU 201 advances to step S1302 if the output of the position sensor 221 is ON. In step S1302, the reader CPU 201 drives the motor 222 in order for the scanner unit 20 to move in the rightward direction. In step S1303, the reader CPU 201 starts the count of the number of the driving pulses of the motor 222. In step S1304, the reader CPU 201 determines whether or not the output of the position sensor 221 changed to OFF so as to determine whether or not the flag left end E passed the detection position B. The reader CPU 201 advances to step S1305 if the output of the position sensor 221 changes to OFF. In step S1305, the reader CPU 201 determines whether or not the count value when the output of the position sensor 221 changed to OFF is greater than or equal to the predetermined value A1. The count value indicates the distance from the position where the flag left end E of the scanner unit 20 is stopped to the detection position B. The position where the scanner unit 20 is stopped is further left than the sleep position P if the count value is greater than or equal to the predetermined value A1. Specifically, the reader CPU 201 determines whether or not the position where the scanner unit 20 is stopped is further left than the sleep position P based on the count value. If the count value is greater than or equal to the predetermined value A1, the processing advances to step S1306 because the motor 222 is capable of sufficiently accelerating. In step S1306, the reader CPU 201 sets the flag (1 bit variable) to 0. The flag indicates whether or not acceleration of the motor 222 should be retried. 0 indicates that a retry is unnecessary and 1 indicates that a retry is necessary. The flag is held in the RAM 203. If the count value is less than the predetermined value A1, the processing advances to step S1307 because the motor 222 is not capable of accelerating to the predetermined speed α. In step S1307, the reader CPU 201 sets the flag to 1. In step S1308, the reader CPU 201 starts the count of the number of the driving pulses from 0. In step S1309, the reader CPU 201 determines whether or not the count value is the same as the predetermined value A so as to determine whether or not the scanner unit 20 reached the home position H. If the count value is the same as the predetermined value A, the reader CPU 201 advances the processing to step S1310 because the scanner unit 20 reached the home position H. In step S1310, the reader CPU 201 stops the motor 222. In step S1311, the reader CPU 201 determines whether or not the flag is 1 so as to determine whether or not a retry of movement of the scanner unit 20 is necessary. A retry is unnecessary if the flag is 0. Meanwhile, if the flag is 1, the reader CPU 201 advances the processing to step S1321 because a retry is necessary. Note that the reader CPU 201 also advances the processing to step S1321 in step S1301 in a case when the output of the position sensor 221 is OFF.

In step S1321, the reader CPU 201 drives the motor 222 in order for the scanner unit 20 to move to the left. In step S1322, the reader CPU 201 determines whether or not the output of the position sensor 221 changed to ON so as to search for the count start position of the counter 204. The reader CPU 201 advances to step S1323 if the output of the position sensor 221 changes to ON. In step S1323, the reader CPU 201 starts in the counter 204 the count of the number of driving pulses to cause the scanner unit 20 to head towards the sleep position P. Note, the counter relating to the predetermined value A1 and the counter relating to the predetermined value A may be separately provided respectively. In step S1324, the reader CPU 201 determines whether or not the count value reaches the predetermined value A1 so as to determine whether or not the scanner unit 20 reached the sleep position P. If the count value is the same as the predetermined value A1, the reader CPU 201 advances the processing to step S1325 because the scanner unit 20 reached the sleep position P. In step S1325, the reader CPU 201 causes the motor 222 to stop and advances the processing to step S1302. By this, the scanner unit 20 stops at the sleep position P and preparation for the acceleration of the motor 222 is performed. In other words, the acceleration of the motor 222 is started from a position from which it is possible to accelerate to the predetermined speed α.

### (Effects)

The second embodiment adds to the same effect as the first embodiment that it becomes possible to cause the scanner unit 20 to be positioned at the home position H with even more accuracy. By this, the scanner unit 20 also becomes capable of more accurate reading of the shading white plate 22 and also the accuracy of the shading correction improves.

### [Third Embodiment]

A third embodiment is characterized in that the position where the scanner unit 20 stops when the image reading apparatus 1000 stops operation is a position where the scanner unit 20 can be physically fixed to the housing 25. In third embodiment, description of portions in common with the first embodiment or the second embodiment is omitted.

### <Special Movement of the Scanner Unit 20>

The position of the scanner unit 20 can be fixed by exciting the motor 222 if power from a commercial power supply is supplied to the image reading apparatus 1000. However, the motor 222 cannot be excited if power from a commercial power supply is not supplied to the image reading apparatus 1000. Also, the motor 222 cannot be excited when power OFF is instructed through the console unit 254. At such a time, there is a possibility that the scanner unit 20 will move from the sleep position P when a vibration occurs in the image reading apparatus 1000. The scanner unit 20 may be fixed to the housing 25 by a fixture such as a screw in order to prevent the scanner unit 20 from being broken.

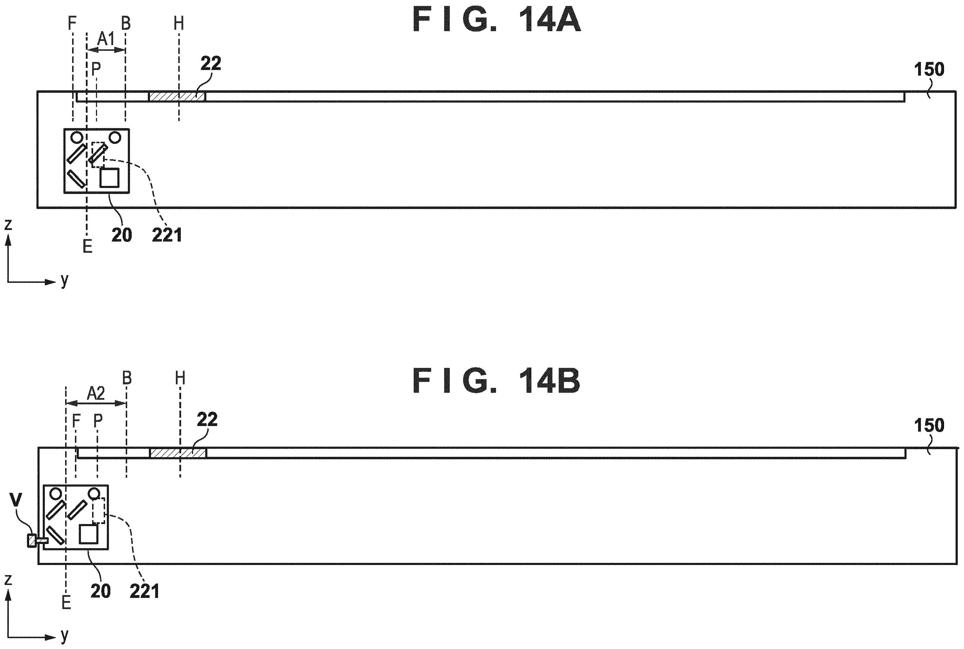

FIG. 14A illustrates a state in which the scanner unit 20 is stopped at the sleep position P. In FIG. 14B, a state in which the scanner unit 20 is stopped at the fixed position F, and is physically fixed to the housing 25 of the reader 150 by a screw V which is a fixing member is illustrated. When comparing FIG. 14A to FIG. 14B, it can be seen that the fixed position F is further left than the sleep position P.

The reader CPU 201 causes the scanner unit 20 to move to the fixed position F and executes a power OFF (shutdown). The operator fixes the scanner unit 20 by using the screw V on the housing 25 of the reader 150. A dedicated instruction for causing the scanner unit 20 to move to the fixed position F may be inputted from the console unit 254. However, in the third embodiment, the reader CPU 201 causes the scanner unit 20 to move to the fixed position F rather than waiting for the dedicated instruction when power OFF is instructed from the console unit 254. In other words, the effort of the operator is reduced. Note, a possibility that the image reading apparatus 1000 is moved is low in the sleep mode. This is because it is typical to make a power off instruction and remove the power supply cable from a commercial power supply outlet in order to move the image reading apparatus 1000. For this reason, the reader CPU 201 causes the scanner unit 20 to move to the sleep position P when an event for transitioning to the sleep mode is detected. Note, the scanner unit 20 may move to the fixed position F even for the sleep mode. Note, a hole or a nut into which the screw V is screwed can be provided on the box 300 which is the housing of the scanner unit 20. A hole into which the screw V is inserted can be provided in the housing 25 of the reader 150.

### <Movement Control of the Scanner Unit 20 at time of Stopping Operation>

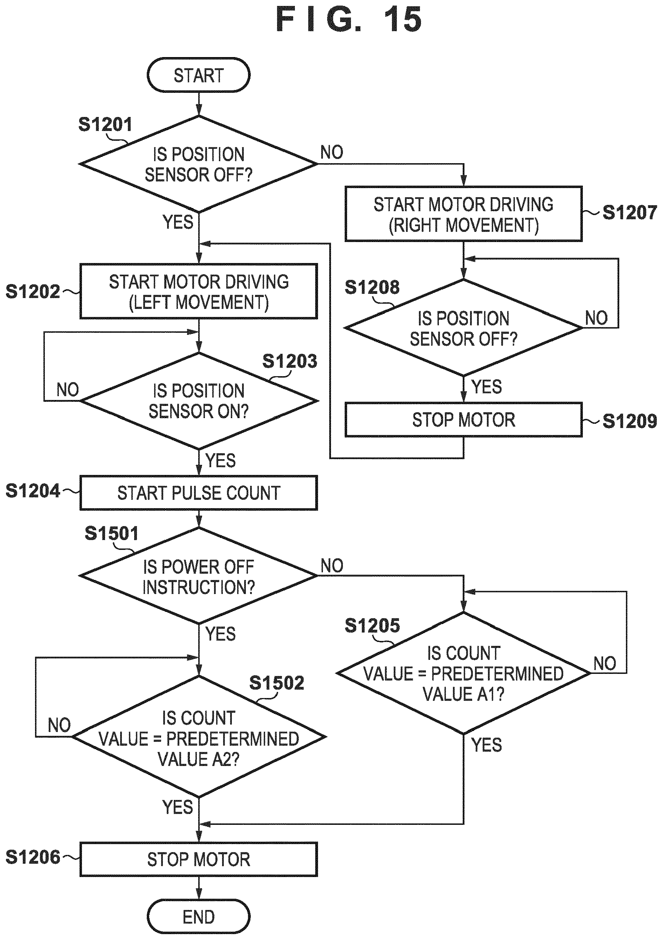

FIG. 15 illustrates movement control of the scanner unit 20 when stopping operation of the image reading apparatus 1000. Note that in FIG. 15, portions common to FIG. 12 are given the same reference numerals, and description of these is omitted. The count of the number of driving pulses is started when the output of the position sensor 221 changes to ON by the scanner unit 20 moving to the left. After this, the reader CPU 201 advances the processing to step S1501.

In step S1501, the reader CPU 201 determines whether or not the operation stop event that occurred is a power OFF instruction inputted through the console unit 254. The operation stop event may be, for example, that a power OFF instruction is input, that nothing is input for a predetermined period, or the like. The reader CPU 201 advances the processing to step S1205 if an event for a transition to the sleep mode occurs. In step S1205, the reader CPU 201 controls the motor 222 such that the number of the driving pulses (count value) supplied to the motor 222 becomes the predetermined value A1. As illustrated in FIG. 14A, the scanner unit 20 reaches the sleep position P by supplying the driving pulses of the predetermined value A1 to the motor 222 from a timing where the output of the position sensor 221 changes to ON. In other words, it becomes possible for the scanner unit 20 to stand by at the sleep position P while the image reading apparatus 1000 is transitioned to the sleep mode. Meanwhile, the reader CPU 201 advances the processing to step S1502 when it is determined in step S1501 that a power OFF instruction is input. In step S1502, the reader CPU 201 controls the motor 222 such that the number of the driving pulses (count value) supplied to the motor 222 becomes the predetermined value A2. As illustrated in FIG. 14B, the scanner unit 20 reaches the sleep position P by supplying the predetermined value A2 driving pulses to the motor 222 from a timing where the output of the position sensor 221 changes to ON. In other words, the predetermined value A2 is the number of driving pulses supplied to the motor 222 from when the flag left end E reaches the detection position B to when it stops at the fixed position F. In other words, the predetermined value A2 is a number of driving pulses corresponding to the movement distance from the detection position B to the fixed position F. The predetermined value A2 is decided at the time of designing the image reading apparatus 1000 and it is stored in the ROM 202.

### (Effects)

In the third embodiment, together with the same effects of the first and second embodiments being achieved, it becomes possible to physically fix the scanner unit 20 by causing the scanner unit 20 to move to the fixed position F at a time of a power OFF. By this, the scanner unit 20 tends not to move in the housing even if the installation position of the image reading apparatus 1000 is changed. Also, convenience of a user improves because an input of a dedicated instruction by an operator such as a user becomes unnecessary.

### <Other>

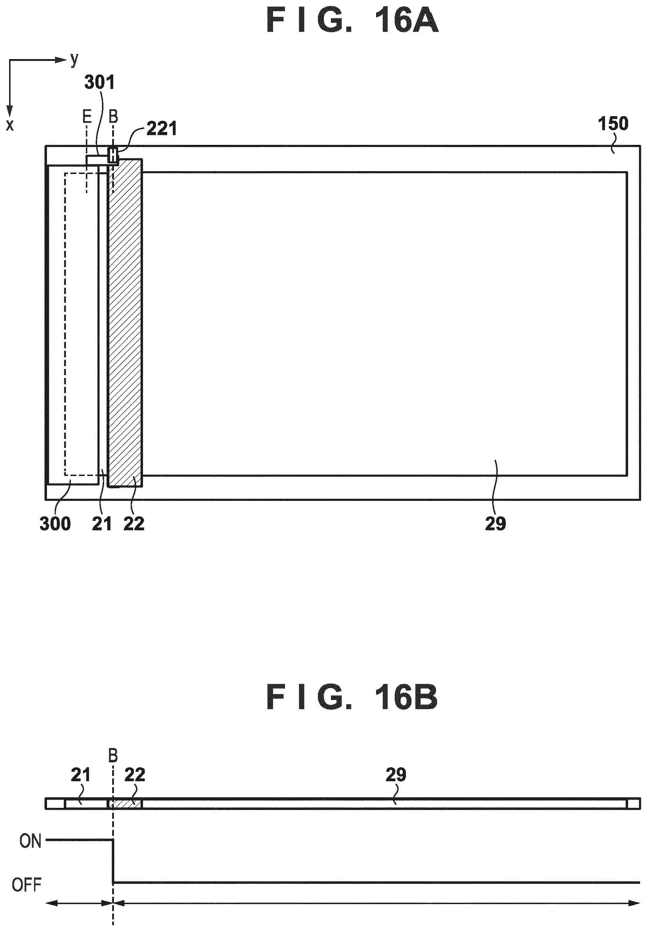

The position sensor 221 of the embodiment is a photo-interrupter type sensor, and although it is assumed that it is something that is arranged to be close to the end portion of the flow-reading glass 21, the present invention is not limited to this. It is sufficient that it be a sensor and an arrangement by which it is possible to detect that the scanner unit 20 is positioned in the predetermined range. FIG. 16A is a plan view illustrating a state in which the flag 301 is bonded to the box 300 such that some of the flag 301 protrudes from the right to the box 300. The position sensor 221 is arranged in the proximity of the end portion of the shading white plate 22. Also, the scanner unit 20 is positioned at the left end of the region in which it can move in the sub-scanning direction. By arranging the position sensor 221 in the proximity of the end of the shading white plate 22, the position in the sub-scanning direction of the space L, that is the detection position B of the position sensor 221, becomes the position that FIG. 16A illustrates. The infrared light where the flag 301 passes through the space L is blocked, even if the scanner unit 20 is positioned at the left end because the flag 301 is bonded such that it protrudes from the right to the box 300. FIG. 16B illustrates a relationship between the output level of the position sensor 221 and the flag left end E. An ordinate indicates the output level of the position sensor 221 and an abscissa indicates the sub-scanning position. Compared to FIG. 5C, in FIG. 16B, the range of the sub-scanning direction where the output of the position sensor 221 is ON is broader. Accordingly, even with the configuration illustrated in FIG. 16A, the position of the scanner unit 20 is detected with more accuracy.

### <Summary>

As described above, the image reading apparatus 1000 has an operation mode for performing a reading of an image and a non-operation mode (example: a sleep mode, a power OFF state, or the like) for not performing a reading of an image. As illustrated in FIG. 1, the scanner unit 20 capable of moving in a first direction and a second direction opposite to the first direction respectively is provided inside of the housing 25 of the reader 150. The motor 222 functions as a movement unit (driving unit) causing the scanner unit 20 to move in the first direction or the second direction. The platen glass 29 is provided on the top surface of the housing 25 and is one example of a light transmissive plate on which an original is set to face the scanner unit 20. The shading white plate 22 is one example of a white reference plate provided upstream (left) in the first direction from the platen glass 29. The position sensor 221 is one example of the detection unit for detecting that the scanner unit 20 is positioned within a predetermined region which is more upstream than the home position H at which the shading white plate 22 can be read in the first direction. The motor 222 is controlled such that the scanner unit 20 is positioned within a predetermined region in a case when a transition is made from the operation mode to the non-operation mode as described using FIG. 8 and FIG. 12. The motor 222 is controlled so that the scanner unit 20 is caused to move from within the predetermined region to a position where the shading white plate 22 which is outside the predetermined region can be read in a case of transitioning from the non-operation mode to the operation mode. The reader CPU 201 and the counter 204 function as a measurement unit which starts a measurement of a movement amount of the scanner unit 20. For example, the reader CPU 201 or the counter 204 starts a measurement when the reader CPU 201 ascertained (determined) based on a result of a detection of the position sensor 221 that the boundary (detection position B) between the inside of the predetermined region and the outside of the predetermined region has been crossed by the scanner unit 20 moving in a first direction. The reader CPU 201 causes movement of the scanner unit 20 by the motor 222 to stop when the movement amount of the scanner unit 20 measured by the counter 204 or the like becomes a movement amount corresponding to the distance from the detection position B to the home position H. In this way, in the present embodiment, the scanner unit 20 moves within the predetermined region when a transition is made to the non-operation mode and a transition to the operation mode is awaited. The detection position B, which is the boundary between the inside of the predetermined region and the outside of the predetermined region, is a position that is a reference for measuring the position of the scanner unit 20. The scanner unit 20 moves to the home position H where the shading white plate 22 can be read and stands by when transition is made to the operation mode. Accordingly, an occurrence of a retry for reading the shading white plate 22 tends not to occur because the shading white plate 22 can be reliably read when an original is read. In other words, a time of a preparation operation is improved in the image reading apparatus 1000. In this way, by virtue of embodiments, the time for moving to a predetermined position of the scanner unit 20 when the image reading apparatus 1000 transitions from the non-operation mode to the operation mode is improved.

As described with regards to step S901 and the like, there are times where it is ascertained that the scanner unit 20 is not positioned within the predetermined region based on a result of a detection of the position sensor 221 acquired when a transition is made from the non-operation mode to the operation mode. In such a case, the reader CPU 201 controls the motor 222 to cause the scanner unit 20 to move in the second direction. Meanwhile, the reader CPU 201 controls the motor 222 to cause the scanner unit 20 to move in the first direction when the reader CPU 201 ascertained that the scanner unit 20 is positioned within the predetermined region based on the result of a detection of the position sensor 221. The motor 222 is controlled to cause the scanner unit 20 to stop at the home position H when the movement amount of the scanner unit 20 measured by the counter 204 becomes a movement amount (Example: predetermined value A) corresponding to the distance from the detection position B to the home position H.

As described regarding the second and third embodiments, the reader CPU 201 controls the motor 222 so that the scanner unit 20 is positioned at a standby position (example: sleep position P or fixed position F) that is within the predetermined region in a case when a transition is made from the operation mode to the non-operation mode. Also, the reader CPU 201 controls the motor 222 to cause the scanner unit 20 to stop at the standby position when the movement amount of the scanner unit 20 becomes a movement amount (example: predetermined value A1 or A2) corresponding to a distance from the boundary to the standby position. Note, the movement amount of the scanner unit 20 is a movement amount measured from when the boundary is passed by the scanner unit 20 moving in the second direction.

As described regarding the second embodiment, the distance from the sleep position P to the detection position B is a distance necessary for accelerating the rotating speed of the motor 222 to a predetermined rotating speed when the image reading apparatus 1000 transitions from the non-operation mode to the operation mode. By this, accuracy of positioning in the home position H is improved because the measurement accuracy of the movement distance of the scanner unit 20 is improved. In other words, the probability of a reading success of the shading white plate 22 increases and the accuracy of the shading correction also improves.

As described regarding step S1305, the scanner unit 20 starts movement in the first direction because the image reading apparatus 1000 transitions from the non-operation mode to the operation mode. The movement amount measured by the counter 204 from a start of movement until the boundary is passed is smaller than the movement amount corresponding to the distance from the standby position to the boundary. In such a case, the reader CPU 201 changes the movement direction of the scanner unit 20 from the first direction to the second direction. The reader CPU 201 changes the movement direction of the scanner unit 20 from the second direction to the first direction when the movement amount measured by the counter 204 from when the boundary is passed becomes a movement amount (example: predetermined value Al) corresponding to the distance from the boundary to the standby position. Then, the reader CPU 201 causes the scanner unit 20 to head towards the home position H. The scanner unit 20 may become misaligned from the standby position in the sleep mode or power OFF state. In such a case, the measurement accuracy of the movement distance of the scanner unit 20 is improved by causing the scanner unit 20 to temporarily move to the standby position, and retrying an acceleration from the standby position.

In the non-operation mode, a power OFF mode (example: power OFF state) and a power saving mode (sleep mode) may be included. The reader CPU 201 causes the scanner unit 20 to move to a first standby position (example: fixed position F) within the predetermined region by controlling the motor 222 in a case when a transition is made to the power OFF mode. The reader CPU 201 causes the scanner unit 20 to move to a second standby position (example: the sleep position P) within the predetermined region by controlling the motor 222 in a case when a transition is made to the power saving mode. As can be seen from FIG. 14A and FIG. 14B, the distance from the detection position B to the fixed position F is longer than the distance from the detection position B to the sleep position P. This is because the fixed position F is a position where a fixing member for fixing the scanner unit 20 can be attached to the scanner unit 20 from the outside of the housing 25. Note, the fixing member may be the screw V. In the housing 25 of the scanner unit 20, a screwing portion into which the screw V is screwed is provided. The screwing portion may be a bolt or may be a hole provided in the box 300. Note, the reader CPU 201 may suppress movement of the scanner unit 20 during the power saving mode by exciting the motor 222 when transition is made to the power saving mode.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A reading unit (20) is positioned in a predetermined region in a case when a transition is made from an operation mode to a non-operation mode. The reading unit (20) moves from the predetermined region to a position at which a white reference plate (22) can be read in a case when a transition is made from the non-operation mode to the operation mode. A movement unit (210) stops when a movement amount of the reading unit (20) measured by a measurement unit (204) becomes a movement amount corresponding to a distance from the boundary to a position at which a white reference plate (22) can be read.

## Claims

1. An image reading apparatus (1000) having an operation mode in which the image reading apparatus performs a reading of an image and a non-operation mode in which the image reading apparatus does not perform a reading of an image, the apparatus comprising:
a housing (25);
reading means (20) provided inside the housing and configured to be capable of respectively moving in a first direction and a second direction that is opposite the first direction;
movement means (210) configured to cause the reading means to move in the first direction or the second direction;
a light transmissive plate (29) on which an original is set;
a white reference plate (22) provided upstream of the light transmissive plate in the first direction;
detection means (221) configured to detect that the reading means is positioned in a predetermined region that is upstream of a position at which the white reference plate can be read in the first direction;
control means (201) configured to control the movement means so that the reading means is positioned in the predetermined region in a case when a transition is made from the operation mode to the non-operation mode and to control the movement means to cause the reading means to move from the predetermined region to a position at which the white reference plate can be read that is outside the predetermined region in a case when a transition is made from the non-operation mode to the operation mode; and
measurement means (204) configured to start a measurement of a movement amount of the reading means upon ascertaining, based on a result of a detection of the detection means, that a boundary between the inside of the predetermined region and the outside of the predetermined region has been crossed by the reading means moving in the first direction, wherein
the control means (201) is further configured to cause movement of the reading means by the movement means to stop when the movement amount of the reading means measured by the measurement means becomes a movement amount corresponding to a distance from the boundary to a position at which the white reference plate can be read.

2. The image reading apparatus according to claim 1, wherein the control means is further configured to control the movement means to cause the reading means to move in the second direction in a case when the control means ascertains that the reading means is not positioned in the predetermined region based on a result of a detection of the detection means acquired when a transition is made from the non-operation mode to the operation mode, control the movement means to cause the reading means to move in the first direction upon ascertaining that the reading means is positioned in the predetermined region based on a result of a detection of the detection means, and control the movement means to cause the reading means to stop at the position at which the white reference plate can be read when the movement amount of the reading means measured by the measurement means becomes a movement amount corresponding to the distance from the boundary to a position at which the white reference plate can be read.

3. The image reading apparatus according to claim 1, wherein the control means is further configured to control the movement means so that the reading means is positioned at a standby position in the predetermined region in a case when the transition is made from the operation mode to the non-operation mode.

4. The image reading apparatus according to claim 3, wherein the control means is further configured to control the movement means to cause the reading means to stop at the standby position when a movement amount of the reading means measured from when the boundary is passed by the reading means moving in the second direction becomes a movement amount corresponding to a distance from the boundary to the standby position.

5. The image reading apparatus according to claim 4, wherein a distance from the standby position to the boundary is a distance that is necessary for a rotating speed of the movement means to accelerate to a predetermined rotating speed when the image reading apparatus transitions from the non-operation mode to the operation mode.

6. The image reading apparatus according to claim 5, wherein the control means, when the image reading apparatus transitions from the non-operation mode to the operation mode, changes a movement direction of the reading means from the first direction to the second direction if a movement amount measured by the measurement means from when the reading means starts movement in the first direction to when it passes the boundary is less than a movement amount corresponding to a distance from the standby position to the boundary, and, when a movement amount measured by the measurement means from when the boundary is passed becomes the movement amount corresponding to the distance from the boundary to the standby position, changes the movement direction of the reading means from the second direction to the first direction and causes the reading means to head toward the position at which the white reference plate can be read.

7. The image reading apparatus according to claim 1, wherein a power OFF mode and a power saving mode are included in the non-operation mode, and
the control means is further configured to cause the reading means to move to a first standby position of the predetermined region by controlling the movement means in a case when a transition is made to the power OFF mode and causes the reading means to move to a second standby position of the predetermined region by controlling the movement means in a case when a transition is made to the power saving mode, and
a distance from the boundary to the first standby position is longer than a distance from the boundary to the second standby position.

8. The image reading apparatus according to claim 7, wherein the first standby position is a position at which a fixing member can be attached to the reading means from outside of the housing in order to fix the reading means.

9. The image reading apparatus according to claim 8, wherein the fixing member is a screw, and a screwing portion into which the screw is screwed is provided in the reading means housing.

10. The image reading apparatus according to claim 7, wherein the control means is further configured to excite the movement means when a transition is made to the power saving mode.

11. An image reading apparatus (1000) having an operation mode in which the image reading apparatus performs a reading of an image and a non-operation mode in which the image reading apparatus does not perform a reading of an image, the apparatus comprising:
a housing (25),
reading means (20) provided inside the housing and configured to be capable of respectively moving in a first direction and a second direction that is opposite the first direction;
a light transmissive plate (29) provided on a top surface of the housing and on which an original is set to face the reading means; and
a white reference plate (22) provided upstream of the light transmissive plate in the first direction, wherein
the reading means (20) is further configured to move to a predetermined region that is a reference for measuring a position of the reading means in a case when a transition is made from the operation mode to the non-operation mode, and
the reading means (20) is further configured to move from the predetermined region to a position at which the white reference plate that is outside the predetermined region can be read if the reading means is positioned in the predetermined region in a case when the transition is made from the non-operation mode to the operation mode, and move from the predetermined region to a position at which the white reference plate can be read after moving to the predetermined region if the reading means is not positioned at the predetermined region in a case when a transition is made from the non-operation mode to the operation mode.
